# EUROPÄISCHE PATENTSCHRIFT

(11) **EP 3 824 714 B1**
(45) Veröffentlichungstag und Bekanntmachung des Hinweises auf die Patenterteilung: **19.10.2022**
(21) Anmeldenummer: 19209978.6
(22) Anmeldetag: 19.11.2019
(51) Int. Cl.: A01D 34/90, A01G 3/053, A01D 34/82

(54) **BEARBEITUNGSGERÄT MIT ROHRTEIL UND KABELANORDNUNG SOWIE MONTAGEVERFAHREN**
MACHINING DEVICE WITH A PIPE PART AND A CABLE ARRANGEMENT AND METHOD OF ASSEMBLY
APPAREIL D'USINAGE POURVU DE PARTIE TUBULAIRE ET DE DISPOSITIF CÂBLE AINSI QUE PROCÉDÉ DE MONTAGE

(43) Veröffentlichungstag der Anmeldung: 26.05.2021
(73) Patentinhaber: Andreas Stihl AG & Co. KG, 71336 Waiblingen (DE)
(72) Erfinder: LÜCKE, Johannes, 71334 Waiblingen (DE); KERN, Jens-Peter, 71336 Waiblingen (DE); KOCH, Johanna, 71638 Ludwigsburg (DE); MAIER, Matthias, 71334 Waiblingen (DE)
(74) Vertreter: Patentanwälte Ruff, Wilhelm, Beier, Dauster & Partner mbB

(56) Entgegenhaltungen:
- DE-A1-102013 223 819
- US-A- 5 446 964
- US-A- 6 014 812
- US-A1- 2016 278 288

## Beschreibung

Die Erfindung bezieht sich auf ein Bearbeitungsgerät mit einem Handbedienbereich, einem sich vom Handbedienbereich weg erstreckenden Rohrteil und einer elektrischen Kabelanordnung im Rohrteil sowie auf ein zugehöriges Montageverfahren.

Derartige Bearbeitungsgeräte sind beispielsweise als handgeführte, d.h. handgetragene oder von Hand geführte bodengetragene, vorzugsweise motorgetriebene Arbeitsgeräte zur Garten- und/oder Forstbearbeitung gebräuchlich, unter anderem als Heckenschneider, Hochentaster, Motorsensen, Heckenscheren, Laubblasgeräte, Kehrgeräte, Motorsägen, Rasenmäher und Vertikutierer, wobei als Motorantrieb ein Verbrennungsmotor oder ein batteriegespeister Elektromotor dient.

Am Handbedienbereich befinden sich ein oder mehrere Bedienelemente, die der Benutzer von Hand betätigen kann, um das Bearbeitungsgerät zu bedienen. Vorzugsweise dient der Handbedienbereich dem Benutzer auch dazu, das Gerät dort zu greifen, um es zu tragen bzw. zu führen. Die elektrische Kabelanordnung dient zur Übertragung elektrischer Ströme, insbesondere zur Signalübertragung, Datenübertragung und/oder Leistungsübertragung. Die Kabelanordnung verläuft im Rohrteil und je nach Anwendungsfall zusätzlich an einer oder beiden Stirnenden des Rohrteils axial über dieses hinaus. In typischen Anwendungen umfasst die Kabelanordnung beispielsweise Kabelverbindungen zwischen dem Handbedienbereich bzw. dort befindlichen Bedienelementen und einer Gerätesteuerungseinheit und/oder zwischen der Gerätesteuerungseinheit und einem Antriebsmotor und/oder zwischen der Gerätesteuerungseinheit und einer Anzeigeeinheit und/oder zwischen dem Handbedienbereich und der Anzeigeeinheit.

Bei dem sich vom Handbedienbereich weg erstreckenden Rohrteil kann es sich beispielsweise um ein Schaftrohr eines Geräteschafts handeln, den Bearbeitungsgeräte vom sogenannten Schaftgerätetyp aufweisen und bei denen typischerweise zwei Geräteteile an je einem der beiden axialen Endbereiche des Geräteschafts angeordnet sind. Bei diesen Geräteteilen kann es sich insbesondere um solche handeln, die ein Bearbeitungswerkzeug und/oder einen Antriebsmotor und/oder eine elektrische Batterieeinheit für einen elektrischen Antriebsmotor beinhalten.

Alternativ kann es sich bei dem Rohrteil z.B. auch um ein Griffrohr eines Bediengriffschafts handeln, der den Handbedienbereich beinhaltet und am Geräteschaft eines Bearbeitungsgeräts vom Schaftgerätetyp an einer Stelle zwischen dessen axialen Endbereichen gehalten ist und vom Geräteschaft absteht. In allen oben erwähnten Ausführungen kann sich das Rohrteil je nach Bedarf und Anwendungsfall nur bis zum Handbedienbereich oder in den Handbedienbereich hinein oder weitergehend durch den Handbereich hindurch erstrecken. Bei Bearbeitungsgeräten zur Garten- und/oder Forstbearbeitung ist diese Bediengriffvariante oftmals durch einen fahrradlenkerartigen, am Geräteschaft festgelegten Bediengriffaufbau realisiert, was dementsprechend auch häufig als Bikelenkergriff bezeichnet wird.

Bei einer Ausführungsvariante von Bearbeitungsgeräten vom Schaftgerätetyp befinden sich am vorderen Schaftendbereich ein Bearbeitungswerkzeug und ein zugehöriger elektrischer Antriebsmotor und am hinteren Schaftendbereich eine elektrische Batterieeinheit zur Leistungsversorgung des Antriebsmotors, wobei ein elektrisches Kabel von der Batterieeinheit zum Antriebsmotor durch den Geräteschaft hindurchgeführt ist. Ein derartiges Gerät ist in der Offenlegungsschrift JP 2016-202122 A2 offenbart, wobei dort zwischen das Kabel und die Innenwand des Schaftrohrs eine Hülse aus elastischem Material eingefügt ist, um Geräuschentwicklungen und Beschädigungen des Kabels vorzubeugen. Eine weitere Kabelanordnung ist von einem Handbedienbereich eines Bikelenkergriffs außerhalb des Schaftrohrs zum hinteren Geräteteil geführt.

Die Offenlegungsschrift US 2016/0278288 A1 offenbart einen Rasentrimmer vom Schaftgerätetyp, wobei in einem hinteren Geräteteil eine Batterieeinheit und eine Steuereinheit und in einem vorderen Geräteteil ein elektrischer Antriebsmotor und ein zugehöriges Bearbeitungswerkzeug angeordnet sind. Ein Schaftrohr erstreckt sich zwischen den beiden endseitigen Geräteteilen, und ein Handbedienbereich schließt sich an den hinteren Geräteteil nach vorn an und umgibt das Schaftrohr. Im Schaftrohr verlaufen ein erstes elektrisches Kabel von der Steuereinheit zu einem im Handbedienbereich angeordneten Geschwindigkeitsregler und ein zweites elektrisches Kabel von der Steuereinheit zum Motor. Entlang des Handbedienbereichs ist an der Innenwand des Schaftrohrs eine Clipsstruktur ausgebildet, mit der das erste elektrische Kabel in diesem Bereich geclipst gehalten werden kann.

Ein weiteres Bearbeitungsgerät der eingangs genannten Art wird von der Anmelderin als Heckenschneider vom Schaftgerätetyp unter der Modellbezeichnung HLA 56 vertrieben. Im hinteren Geräteteil ist ein Akkupack angeordnet, am vorderen Geräteteil befinden sich der elektrische Motor und das Schneidwerkzeug. An den hinteren Geräteteil schließt sich nach vorn ein das Schaftrohr umgebender Handbedienbereich an. Um die Kabelanordnung vor Beschädigungen durch Bedienelemente zu schützen, die sich bei Betätigung durch eine jeweilige Durchlassöffnung im Schaftrohr nach innen in das Schaftrohr hinein erstrecken, erstreckt sich vom hinteren Geräteteil bis in diesen Abschnitt des Handbedienbereichs hinein eine stabförmige Kabelführung, die als Trennung zwischen der Kabelanordnung und dem Eingriffsbereich der Bedienelemente in das Schaftrohr fungiert. Bei der Fertigungsmontage dieses Geräts wird zunächst die Kabelanordnung in das Schaftrohr eingelegt und anschließend die stabförmige Kabelführung in den entsprechenden Bereich des Schaftrohrs eingeschoben.

Der Erfindung liegt als technisches Problem die Bereitstellung eines Bearbeitungsgeräts der eingangs genannten Art, das gegenüber dem oben erwähnten Stand der Technik insbesondere hinsichtlich der Kabelanordnung im Rohrteil Vorteile bietet, und eines vorteilhaften Verfahrens zur Montage eines solchen Bearbeitungsgeräts zugrunde.

Die Erfindung löst dieses Problem durch die Bereitstellung eines Bearbeitungsgeräts mit den Merkmalen des Anspruchs 1 und eines Montageverfahrens mit den Merkmalen des Anspruchs 11. Vorteilhafte Weiterbildungen der Erfindung sind in den Unteransprüchen angegeben, deren Wortlaut hiermit durch Verweis zum Bestandteil der Beschreibung gemacht wird.

Das erfindungsgemäße Bearbeitungsgerät beinhaltet einen stabförmigen, in das Rohrteil eingefügten und darin gehaltenen Kabelhalter, der ein Kabelhaltemittel aufweist, mit dem die Kabelanordnung am Kabelhalter vormontiert gehalten ist. Durch die Kabelhaltemittel ist der Kabelhalter in der Lage, die elektrische Kabelanordnung nicht nur zu führen, sondern zu halten. Die Stabform impliziert dabei insbesondere, dass die Länge des Kabelhalters in einer Längsrichtung größer ist als seine Breite in einer dazu senkrechten Querrichtung. Durch seine Stabform ist der Kabelhalter geeignet, in das Rohrteil eingefügt zu werden und die Kabelanordnung entlang seiner entsprechenden Stablänge zu halten. Hierbei ist die Kabelanordnung am Kabelhalter vormontiert, d.h. die Kabelanordnung wird zuerst am Kabelhalter befestigt, bevor der Kabelhalter in seine Position im Rohrteil verbracht wird.

Diese Charakteristik des Kabelhalters macht sich das erfindungsgemäße Montageverfahren zunutze, indem gemäß diesem Verfahren zur Montage des Bearbeitungsgeräts zunächst die Kabelanordnung mithilfe des Kabelhaltemittels am Kabelhalter befestigt wird und anschließend der Kabelhalter mit der daran gehaltenen Kabelanordnung in das Rohrteil eingefügt wird. Dies erlaubt eine vergleichsweise einfache Montage in diesem Fertigungsstadium des Bearbeitungsgeräts. Außerdem schaffen diese erfindungsgemäßen Maßnahmen gute Voraussetzungen für weitere vorteilhafte Optimierungen in Bezug auf das Führen und Halten der Kabelanordnung und den damit zusammenhängenden Fertigungsmontageschritten. Durch den Kabelhalter lässt sich die Kabelanordnung in vorteilhafter Weise vor Beschädigungen sowohl während der Montage als auch im Gebrauch des Bearbeitungsgerätes schützen.

In einer Weiterbildung der Erfindung erstreckt sich das Rohrteil in den Handbedienbereich hinein und/oder durch diesen hindurch, und der Handbedienbereich weist ein handbetätigt bewegliches Bedienelement auf, wobei das Rohrteil umfangsseitig eine Durchlassöffnung beinhaltet, durch die sich das Bedienelement mindestens in einer zugehörigen Betätigungsstellung hindurch erstreckt. Für diesen Gerätetyp bietet der Kabelhalter den Vorteil, dass er die Kabelanordnung gerade auch im die Durchlassöffnung beinhaltenden Abschnitt des Rohrteils in einer geeigneten Position halten und nicht nur führen kann, in der die Kabelanordnung vom Eingriffsbereich des Bedienelements durch die Durchlassöffnung hindurch ferngehalten wird. Je nach Bedarf und Ausführung kann der Handbedienbereich ein oder mehrere weitere handbetätigt bewegliche Bedienelemente aufweisen, mit denen jeweils eine weitere umfangsseitige Durchlassöffnung im Rohrteil korrespondieren kann.

In einer Weiterbildung der Erfindung weist der Kabelhalter eine Steckanschlusshalterung für einen mit der Kabelanordnung verbundenen Steckanschluss einer elektrischen Steckverbindung auf. Dies ermöglicht vorteilhaft eine Vormontage der Kabelanordnung zusammen mit dem Steckanschluss am Kabelhalter. Der Steckanschluss kann somit in einfacher und leicht zugänglicher Weise am Kabelhalter vormontiert werden, solange dieser noch nicht in das Rohrteil eingefügt ist, und kann anschließend zusammen mit dem Kabelhalter in das Rohrteil eingeschoben werden.

In einer Ausgestaltung der Erfindung ist die Steckanschlusshalterung dafür eingerichtet, den Steckanschluss mit einer sich quer zu einer Längsrichtung des Kabelhalters erstreckten Steckrichtung zu halten, und das Rohrteil weist umfangsseitig eine Durchstecköffnung auf, durch die ein mit dem Steckanschluss zusammenwirkender Gegensteckanschluss der elektrischen Steckverbindung durchsteckbar ist. Dies ermöglicht in vorteilhaft einfacher Weise die Herstellung der elektrischen Steckverbindung nach dem Einfügen des Kabelhalters mit dem daran vormontierten Steckanschluss in das Rohrteil. Dazu kann der Gegensteckanschluss in einfacher Weise durch die Durchstecköffnung des Rohrteils hindurch mit dem Steckanschluss zusammengesteckt werden.

In einer Weiterbildung der Erfindung weist der Kabelhalter eine Ferritkernhalterung für ein mit der Kabelanordnung verbundenes, elektrisches Ferritkern-Bauelement auf. Dies ist insbesondere für Bearbeitungsgeräte von Vorteil, bei denen ein derartiges Ferritkern-Bauelement vorgesehen ist. Durch die Ferritkernhalterung ist es möglich, dieses Ferritkern-Bauelement am Kabelhalter vorzumontieren, bevor der Kabelhalter anschließend zusammen mit dem vormontierten Ferritkern-Bauelement in das Rohrteil eingeschoben wird.

In einer Weiterbildung der Erfindung umfasst das Bearbeitungsgerät einen Geräteschaft, der den Handbedienbereich und das Rohrteil als ein sich in den Handbedienbereich hinein und/oder durch den Handbedienbereich hindurch erstreckendes Schaftrohr umfasst, einen ersten Geräteteil an einem ersten axialen Endbereich des Geräteschafts und einen zweiten Geräteteil an einem zweiten axialen Endbereich des Geräteschafts, wobei sich der Handbedienbereich zwischen den beiden Geräteteilen befindet. Diese Weiterbildung ist insbesondere für die Realisierung von Bearbeitungsgeräten des Schaftgerätetyps vorteilhaft, bei denen der Handbedienbereich das Schaftrohr in einem entsprechenden Schaftrohrabschnitt umgibt, z.B. an einen hinteren der beiden Geräteteile angrenzend sich von diesem nach vorn erstreckend.

In einer alternativen Weiterbildung der Erfindung umfasst das Bearbeitungsgerät einen Geräteschaft, einen ersten Geräteteil an einem ersten axialen Endbereich des Geräteschafts, einen zweiten Geräteteil an einem zweiten axialen Endbereich des Geräteschafts und einen am Geräteschaft an einer Stelle zwischen dem ersten und dem zweiten axialen Endbereich gehaltenen und vom Geräteschaft abstehenden Bediengriffschaft, der den Handbedienbereich und das Rohrteil als ein Griffrohr umfasst. Diese Weiterbildung eignet sich insbesondere zur Realisierung von Bearbeitungsgeräten des Schaftgerätetyps, die über einen Bikelenkergriff bzw. Bikelenkeraufbau verfügen.

In einer Ausgestaltung der Erfindung für Bearbeitungsgeräte vom Schaftgerätetyp ist vorgesehen, dass der erste Geräteteil einen vorderen Geräteteil bildet und ein Bearbeitungswerkzeug umfasst, wobei für das Bearbeitungswerkzeug ein Antriebsmotor vorgesehen ist, der im ersten oder im zweiten Geräteteil angeordnet ist. Wenn sich der Antriebsmotor und das Bearbeitungswerkzeug in unterschiedlichen Geräteteilen befinden, ist zusätzlich in an sich üblicher Weise im Schaftrohr eine Antriebswelle oder dergleichen zur Kraftübertragung vom Antriebsmotor zum Bearbeitungswerkzeug vorgesehen.

In einer Ausgestaltung der Erfindung dient eine elektrische Batterieeinheit im zweiten Geräteteil als elektrische Energiequelle für den in diesem Fall elektrischen Antriebsmotor. Wenn sich Batterieeinheit und Antriebsmotor in unterschiedlichen Geräteteilen befinden, beinhaltet die Kabelanordnung ein elektrisches Stromkabel zur Leistungsversorgung von der Batterieeinheit zum Antriebsmotor.

In einer Weiterbildung der Erfindung ist das Bearbeitungsgerät als handgeführtes Garten- oder Forstbearbeitungsgerät ausgebildet, insbesondere kann es sich hierbei um ein handgetragenes oder ein bodengetragenes und nur handgeführtes Gerät handeln.

In einer Weiterbildung der Erfindung wird im Rahmen des Montageverfahrens das Rohrteil nach Einfügen des Kabelhalters in eine zugeordnete Rohraufnahme des Handbedienbereichs eingeschoben. Je nach Bedarf und Anwendungsfall wird das Rohrteil hierbei nur bis zu einer bestimmten Stelle im Inneren des Handbedienbereichs oder alternativ durch den gesamten Handbedienbereich hindurch eingeschoben.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Perspektivansicht eines Heckenschneiders,
- Fig. 2: eine teilweise schematische Perspektivansicht eines Bearbeitungsgeräts vom Schaftgerätetyp,
- Fig. 3: eine Teillängsschnittansicht des Geräts von Fig. 2 in der Umgebung eines Handbedienbereichs,
- Fig. 4: eine Seitenansicht eines Kabelhalters mit vormontierter Kabelanordnung und vormontiertem Ferritkern-Bauelement,
- Fig. 5: eine Längsschnittansicht des Geräts von Fig. 2 in einem vorderen Teil des Handbedienbereichs,
- Fig. 6: eine Längsschnittansicht des Geräts von Fig. 2 im Bereich einer elektrischen Steckverbindung im Handbedienbereich,
- Fig. 7: eine Montagedarstellung zur Veranschaulichung einer Montagereihenfolge für den Kabelhalter, die Kabelanordnung und ein Rohrteil für eine gegenüber derjenigen von Fig. 4 modifizierte Kabelhaltervariante,
- Fig. 8: die Anordnung von Fig. 7 im fertig vormontierten Zustand,
- Fig. 9: eine Längsschnittansicht entsprechend Fig. 3 mit zusätzlich gezeigtem Rohrteil,
- Fig. 10: die Ansicht von Fig. 9 ohne das Rohrteil für die Kabelhaltervariante von Fig. 7,
- Fig. 11: die Ansicht von Fig. 9 mit einem zusätzlich angebrachten Bedienelement im Handbedienbereich und
- Fig. 12: eine Perspektivansicht eines Rasentrimmers vom Schaftgerätetyp mit Bikelenkeraufbau.

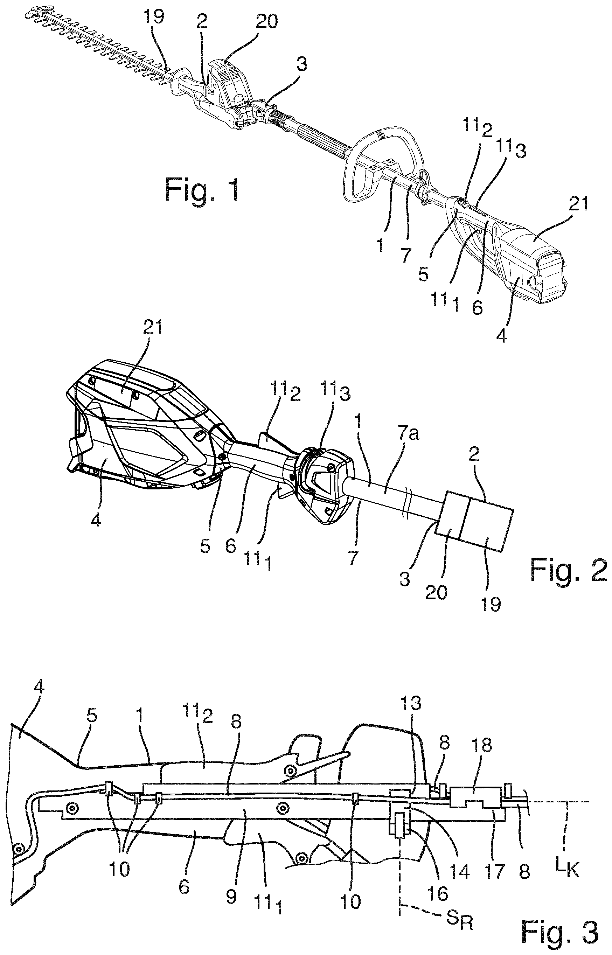

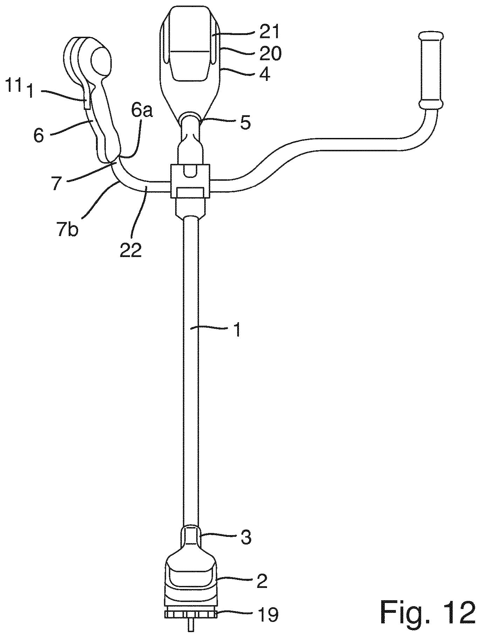

In den Fig. 1 und 2 sind Bearbeitungsgeräte vom Schaftgerätetyp gezeigt, wobei es sich in Fig. 2 insbesondere um ein handgeführtes Garten- oder Forstbearbeitungsgerät, alternativ ein anderes Bearbeitungsgerät, handeln kann und Fig. 1 speziell einen Heckenschneider zeigt. Fig. 12 veranschaulicht speziell ein Bearbeitungsgerät in Form eines Rasentrimmers vom Schaftgerätetyp mit Bikelenkeraufbau. In vorteilhaften Ausführungen ist das Bearbeitungsgerät ein handgetragenes Garten- oder Forstbearbeitungsgerät, alternativ ist es als bodengetragenes und nur handgeführtes Bearbeitungsgerät realisiert.

Die gezeigten Bearbeitungsgeräte beinhalten jeweils einen Handbedienbereich 6, ein sich vom Handbedienbereich 6 weg erstreckendes Rohrteil 7, eine elektrische Kabelanordnung 8 im Rohrteil 7 und einen stabförmigen, in das Rohrteil 7 eingefügten und darin gehaltenen Kabelhalter 9, der ein Kabelhaltemittel 10 aufweist, mit dem die Kabelanordnung 8 am Kabelhalter 9 vormontiert gehalten ist. Die Kabelanordnung 8 und der Kabelhalter 9 sind in den Gesamtansichten der Fig. 1, 2 und 12 nicht zu erkennen, jedoch in den Fig. 3 bis 11, die vorteilhafte Realisierungen für das Gerät von Fig. 2 veranschaulichen, wobei die in den Fig. 3 bis 11 veranschaulichten Ausführungen für die Kabelanordnung 8 und den Kabelhalter 9 in gleicher Weise Bestandteil der Geräte der Fig. 1 und 12 sein können. Aufgrund seiner Stabform kann der Kabelhalter 9 in das Rohrteil 7 eingefügt werden, und mit seinen Kabelhaltemitteln 10 ist er in der Lage, die Kabelanordnung 8 in einer gewünschten Weise entlang seiner Stablänge zu halten.

Diese Auslegung des Kabelhalters 9 ermöglicht es, bei der Montage des Bearbeitungsgerätes in einem entsprechenden Verfahrensschritt die Kabelanordnung 8 mit Hilfe des Kabelhaltemittels 10 am Kabelhalter 9 zu befestigen und dadurch am Kabelhalter 9 vorzumontieren und anschließend den Kabelhalter 9 mit der daran gehaltenen Kabelanordnung 8 in das Rohrteil 7 einzufügen. Dies vereinfacht in diesem Fertigungsstadium die Montage des Bearbeitungsgeräts, wobei durch den Kabelhalter 9 die Führung und Halterung der Kabelanordnung 8 in dem Bereich des Bearbeitungsgeräts, in welchem sich der Kabelhalter 9 erstreckt, optimiert werden kann. Durch den Kabelhalter 9 lässt sich die Kabelanordnung 8 in vorteilhafter Weise vor Beschädigungen während dieser Montage, aber auch im späteren Gebrauch des Bearbeitungsgerätes schützen.

Das Kabelhaltemittel 10 kann beispielsweise eine oder mehrere herkömmliche Kabelklemmelemente oder Kabelclipselemente oder Kabelbinderelemente oder dergleichen beinhalten, die vorzugsweise an mehreren voneinander beabstandeten Haltepositionen entlang der Längserstreckung des Kabelhalters 7 vorgesehen sind..

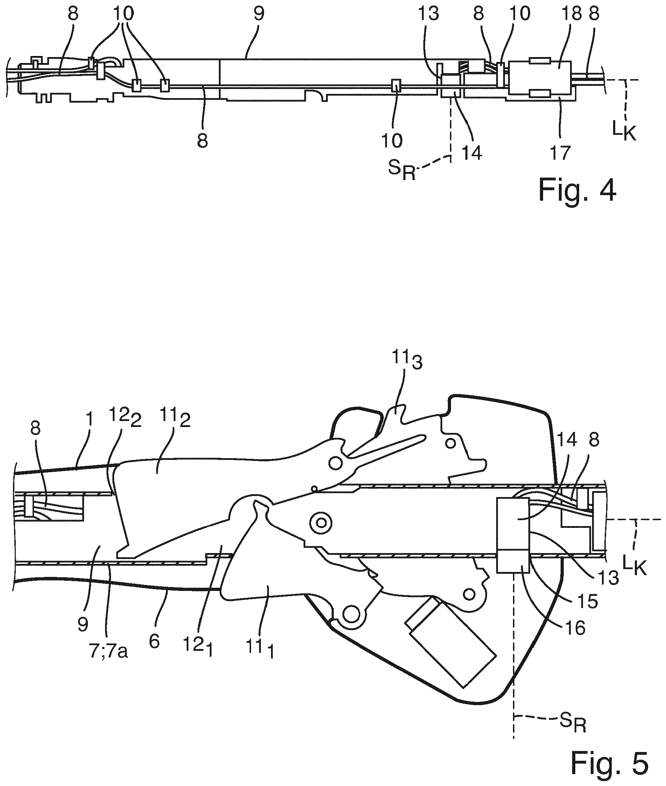

In vorteilhaften Ausführungen erstreckt sich wie in den gezeigten Beispielen das Rohrteil 7 durch den Handbedienbereich 6 hindurch, wobei der Handbedienbereich 6 ein handbetätigt bewegliches Bedienelement 111 aufweist und das Rohrteil 7 umfangsseitig eine Durchlassöffnung 121 beinhaltet, durch die sich das Bedienelement 111 mindestens in einer zugehörigen Betätigungsstellung, wie sie in den Fig. 3 und 5 gezeigt ist, hindurch erstreckt. Der Kabelhalter 9 kann in diesem Fall dafür sorgen, dass die Kabelanordnung 8 im Bereich der Durchlassöffnung 121 außerhalb des Eingriffsbereichs des Bedienelements 111 in die Durchlassöffnung 121 gehalten wird. In alternativen Ausführungen erstreckt sich das Rohrteil 7 nur bis in den Handbedienbereich 6 hinein, und in anderweitigen alternativen Ausführungen erstreckt sich das Rohrteil 7 nur außerhalb des Handbedienbereichs 6.

In entsprechenden Ausführungen weist der Kabelhalter 9 wie in den gezeigten Beispielen eine Steckanschlusshalterung 13 für einen mit der Kabelanordnung 8 verbundenen Steckanschluss 14 an einer elektrischen Steckverbindung auf. Vorzugsweise wird der Steckanschluss 14 an der Steckanschlusshalterung 13 im Rahmen der Vormontage der Kabelanordnung 8 am Kabelhalter 9 vormoniert, solange der Kabelhalter 9 noch nicht in das Rohrteil 7 eingefügt ist und daher der Steckanschluss 14 und die Steckanschlusshalterung 13 leicht zugänglich sind. Anschließend kann dann der an der Steckanschlusshalterung 13 vormontierte Steckanschluss 14 zusammen mit der Kabelanordnung 8 und dem Kabelhalter 9 in das Rohrteil 7 eingeschoben werden. In alternativen Ausführungen besitzt der Kabelhalter 9 keine derartige Steckanschlusshalterung.

Die Steckanschlusshalterung 13 kann je nach Bedarf und Anwendungsfall so konfiguriert sein, dass sie den Steckanschluss 14 geklemmt oder geclipst oder geschraubt oder in anderer herkömmlicher Befestigungsweise am Kabelhalter 9 hält.

In vorteilhaften Realisierungen ist wie den gezeigten Ausführungsbeispielen die Steckanschlusshalterung 13 dafür eingerichtet, den Steckanschluss 14 mit einer sich quer zu einer Längsrichtung LK des Kabelhalters 9 erstreckenden Steckrichtung SR zu halten, wobei die Steckrichtung SR senkrecht zur Längsrichtung LK des Kabelhalters 9 ist oder mit dieser einen spitzen Winkel einschließt, in entsprechenden Fällen zwischen 45° und 90°. Das Rohrteil 7 weist umfangsseitig eine Durchstecköffnung 15 auf, durch die ein Gegensteckanschluss 16 der elektrischen Steckverbindung durchgesteckt werden kann, der mit dem Steckanschluss 14 zusammenwirkt. Dadurch ist es in einfacher Weise möglich, die elektrische Steckverbindung erst dann herzustellen, wenn der Kabelhalter 9 in das Rohrteil 7 eingefügt ist, wozu der Gegensteckanschluss 16 durch die Durchstecköffnung 15 des Rohrteils 7 hindurch in den Steckanschluss 14 eingesteckt bzw. mit diesem zusammengesteckt wird. In alternativen Ausführungen liegt die Steckrichtung SR des Steckanschlusses 14 parallel zur Längsrichtung LK des Kabelhalters 9.

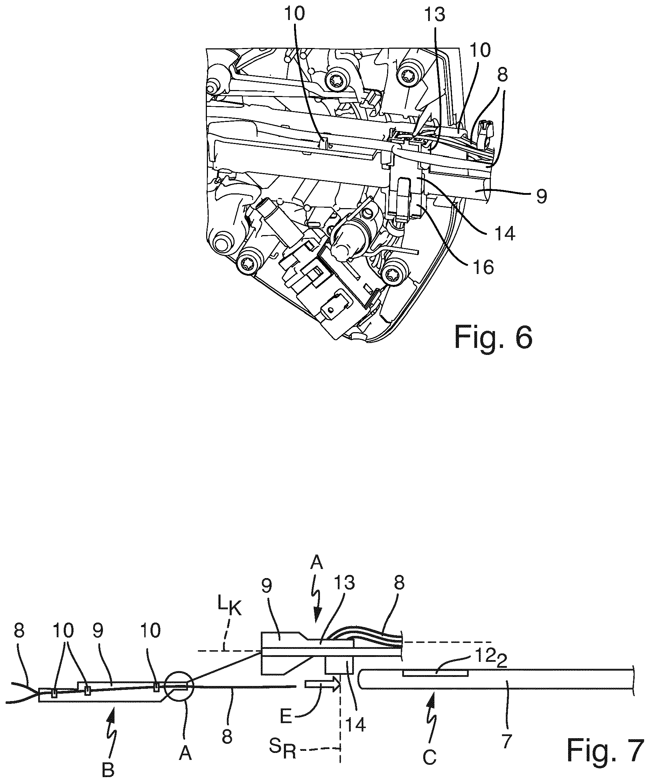

In entsprechenden Ausführungen beinhaltet der Kabelhalter 9 eine Ferritkernhalterung 17 für ein mit der Kabelanordnung 8 verbundenes, elektrisches Ferritkern-Bauelement 18, wie aus den Fig. 3 und 4 ersichtlich. In diesem Fall kann das Ferritkern-Bauelement 18 in leicht zugänglicher Weise am Kabelhalter 9 vormontiert werden, bevor dieser in das Rohrteil 7 eingeschoben wird. Der Kabelhalter 9 kann dann zusammen mit dem Ferritkern-Bauelement 18 in das Rohrteil 7 eingeschoben werden. Die Ferritkernhalterung 17 kann als eine beliebige herkömmliche, für diesen Zweck geeignete, vorzugsweise lösbare Halterung realisiert sein, z.B. zum geklemmten, geklipsten oder geschraubten Halten des Ferritkern-Bauelements 18. In alternativen Ausführungen besitzt der Kabelhalter 9 keine Ferritkernhalterung, wie in der Ausführungsvariante der Fig. 7, 8 und 10. Diese alternativen Ausführungsvarianten eignen sich insbesondere für Bearbeitungsgeräte, die kein Ferritkern-Bauelement im Inneren des Rohrteils 7 benötigen.

In vorteilhaften Ausführungsformen beinhaltet das Bearbeitungsgerät wie in den Ausführungsbeispielen der Fig. 1 und 2 einen Geräteschaft 1, der den Handbedienbereich 6 und das Rohrteil 7 als ein sich in den Handbedienbereich 6 hinein und/oder durch den Handbedienbereich 6 hindurch erstreckendes Schaftrohr 7a umfasst, einen ersten Geräteteil 1 an einem ersten axialen Endbereich 3 des Geräteschafts 1 und einen zweiten Geräteteil 4 an einem zweiten axialen Endbereich 5 des Geräteschafts 1, wobei sich der Handbedienbereich 6 zwischen den beiden Geräteteilen 2, 4 befindet. Diese Geräteausführung ist insbesondere für die Bereitstellung von Bearbeitungsgeräten des Schaftgerätetyps geeignet, bei denen der Handbedienbereich 6 das Schaftrohr 7a in einem entsprechenden Schaftrohrabschnitt umgibt, z.B. angrenzend an einen hinteren Geräteteil 4 der beiden Geräteteile 2, 4 und sich von diesem hinteren Geräteteil 4 aus nach vorn erstreckend, wie im Fall der Geräte der Fig. 1 und 2.

In alternativen Ausführungen beinhaltet das Bearbeitungsgerät wie im Ausführungsbeispiel von Fig. 12 den Geräteschaft 1, den ersten Geräteteil 2 am ersten axialen Endbereich 3 des Geräteschafts 1, den zweiten Geräteteil 4 am zweiten axialen Endbereich 5 des Geräteschafts 1 und einen am Geräteschaft 1 an einer Stelle zwischen dem ersten und dem zweiten axialen Endbereich 3, 5 gehaltenen und vom Geräteschaft 1 abstehenden Bediengriffschaft 22, der den Handbedienbereich 6 und das Rohrteil 7 als ein Griffrohr 7b umfasst. Diese Geräterealisierung eignet sich insbesondere zur Bereitstellung von Bearbeitungsgeräten des Schaftgerätetyps, die über einen Bikelenkergriff bzw. Bikelenkeraufbau verfügen, wie dies beim Gerät von Fig. 12 der Fall ist.

In entsprechenden Ausführungen beinhaltet das Bearbeitungsgerät wie in den gezeigten Beispielen ein Bearbeitungswerkzeug 19 im ersten Geräteteil 2, wobei der erste Geräteteil 2 in den gezeigten Beispielen einen vorderen Geräteteil bildet, und einen Antriebsmotor 20 für das Bearbeitungswerkzeug 19, der im ersten oder im zweiten Geräteteil 2, 4 angeordnet ist, wobei der zweite Geräteteil 4 in den gezeigten Beispielen einen hinteren Geräteteil bildet. Beispielhaft ist der Antriebsmotor 20 bei den Bearbeitungsgeräten der Fig. 1 und 2 am vorderen Geräteteil 2 angeordnet, beim Bearbeitungsgerät von Fig. 12 ist er am hinteren Geräteteil 4 angeordnet, wobei alternativ die jeweils andere Positionierung des Antriebsmotors 20 verwirklicht sein kann. Wenn sich Bearbeitungswerkzeug 19 und Antriebsmotor 20 in bzw. an verschiedenen Geräteteilen 2, 4 befinden, verläuft wie üblich im Geräteschaft 1 bzw. dem Schaftrohr 7a eine Antriebswelle zur Kraftübertragung vom Antriebsmotor 20 zum Bearbeitungswerkzeug 19.

In entsprechenden Ausführungen umfasst das Bearbeitungsgerät wie in den gezeigten Beispielen eine elektrische Batterieeinheit 21 im zweiten, z.B. hinteren Geräteteil 4, wobei die Batterieeinheit 21 als elektrische Energiequelle für den Antriebsmotor 20 dient. Wenn sich Batterieeinheit 21 und Antriebsmotor 20 in verschiedenen Geräteteilen 2, 4 befinden, beinhaltet die Kabelanordnung 8 typischerweise ein elektrisches Stromkabel zur Leistungsversorgung von der Batterieeinheit 21 zum Antriebsmotor 20.

In den Ausführungsbeispielen der Fig. 1 bis 11 beinhaltet der Handbedienbereich 6 zwei weitere handbetätigt bewegliche Bedienelemente 112, 113, und das Rohrteil 7 beinhaltet umfangsseitig eine weitere Durchlassöffnung 122, durch die sich das Bedienelement 112 mindestens in einer in den Fig. 3 und 5 gezeigten, zugehörigen Betätigungsstellung hindurch erstreckt. Auch insoweit sorgt der Kabelhalter 9 dafür, dass die Kabelanordnung 8 nicht in den Bereich der Durchlassöffnung 122 gelangen und die Bedienbetätigung des Bedienelements 112 stören bzw. durch diese Bedienbewegung geschädigt werden kann. Dazu führt und hält der Kabelhalter 9 die Kabelanordnung 8 geeignet von der Durchlassöffnung 122 des Rohrteils 7 fern. In den Fig. 2 und 9 bis 11 sind die drei Bedienelemente 111, 112, 113 in einer nicht betätigten Ausgangsstellung gezeigt.

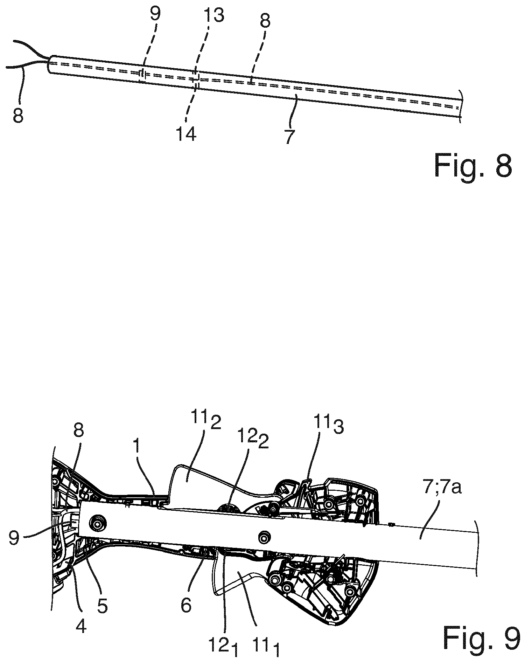

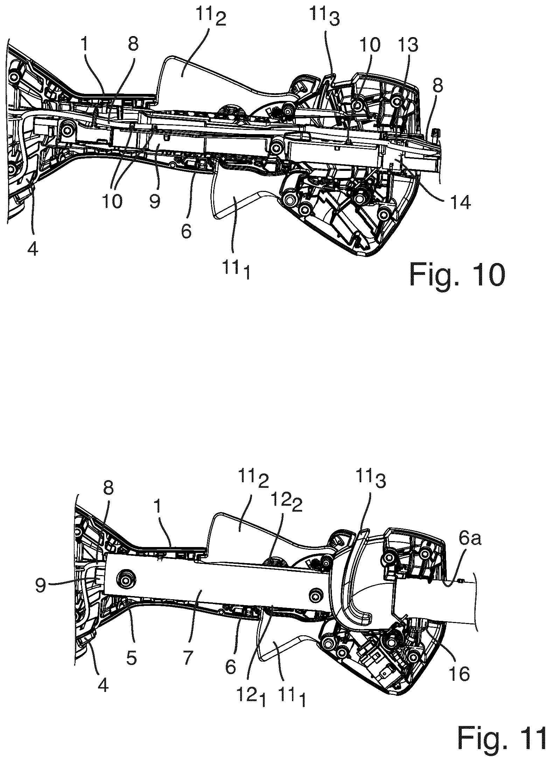

Die Fig. 7 und 8 veranschaulichen etwas detaillierter den Montagevorgang bezüglich des Rohrteils 6, des Kabelhalters 9 und der Kabelanordnung 8 für die dort betrachtete Ausführungsform. Zunächst wird der Steckanschluss 14 der Kabelanordnung 8 an der Steckanschlusshalterung 13 des Kabelhalters 9 montiert, wie dies in Fig. 7 in einer entsprechenden Teilexplosionsansicht als Verfahrensschritt A repräsentiert ist. Dann wird die Kabelanordnung 8 mit Hilfe des Kabelhaltemittels 10 am Kabelhalter 9 befestigt, wie dies in Fig. 7 in einer entsprechenden Teilexplosionsansicht als Verfahrensschritt B repräsentiert ist. Alternativ können die Verfahrensschritte A und B vertauscht sein. Anschließend wird der Kabelhalter 9 mit der daran gehaltenen Kabelanordnung 8 in Längsrichtung LK des Kabelhalters 9 bzw. des Rohrteils 7 in das Rohrteil 7 eingefügt, wie dies in Fig. 7 durch einen zugehörigen Einschubpfeil E und in einer entsprechenden Teilexplosionsansicht als Verfahrensschritt C repräsentiert ist, so dass sich der in Fig. 8 gezeigte Vormontagekomplex ergibt. Danach wird in entsprechenden Ausführungen das Rohrteil 7 in eine zugehörige Rohraufnahme 6a des Handbedienbereichs 6 eingeschoben oder, anders gesagt, der Handbedienbereich 6 wird auf das Rohrteil 7 aufgeschoben. Die montierte Lage des Rohrteils 7 im Handbedienbereich 6 ist z.B. aus den Fig. 9 und 11 zu erkennen.

Wie die gezeigten und die weiteren oben erwähnten Ausführungsbeispiele deutlich machen, stellt die Erfindung ein insbesondere als handgeführtes Garten- oder Forstbearbeitungsgerät einsetzbares Bearbeitungsgerät zur Verfügung, das in sehr vorteilhafter Weise mittels eines hierfür geeignet konfigurierten Kabelhalters eine definierte Halterung und Führung und damit einen definierten Verlauf einer elektrischen Kabelanordnung in einem Rohrteil des Gerätes ermöglicht, so dass auch in einfacher Weise dafür gesorgt werden kann, dass die Kabelanordnung keine anderen Komponenten des Gerätes in deren Anordnung und Funktion stört.

## Patentansprüche

1. Bearbeitungsgerät, insbesondere handgeführtes Garten- oder Forstbearbeitungsgerät, mit
- einem Handbedienbereich (6),
- einem sich vom Handbedienbereich (6) weg erstreckenden Rohrteil (7) und
- einer elektrischen Kabelanordnung (8) im Rohrteil (7), **gekennzeichnet durch**
- einen stabförmigen, in das Rohrteil (7) eingefügten und darin gehaltenen Kabelhalter (9), der ein Kabelhaltemittel (10) aufweist, mit dem die Kabelanordnung (8) am Kabelhalter (9) vormontiert gehalten ist.

2. Bearbeitungsgerät nach Anspruch 1, weiter **dadurch gekennzeichnet, dass**
- sich das Rohrteil (7) in den Handbedienbereich (6) hinein und/oder durch den Handbedienbereich (6) hindurch erstreckt,
- der Handbedienbereich (6) ein handbetätigt bewegliches Bedienelement (11₁) aufweist und
- das Rohrteil (7) umfangsseitig eine Durchlassöffnung (12₁) beinhaltet, durch die sich das Bedienelement (11₁) mindestens in einer zugehörigen Betätigungsstellung hindurch erstreckt.

3. Bearbeitungsgerät nach Anspruch 1 oder 2, weiter **dadurch gekennzeichnet, dass** der Kabelhalter (9) eine Steckanschlusshalterung (13) für einen mit der Kabelanordnung (8) verbundenen Steckanschluss (14) einer elektrischen Steckverbindung aufweist.

4. Bearbeitungsgerät nach Anspruch 3, weiter **dadurch gekennzeichnet, dass**
- die Steckanschlusshalterung (13) dafür eingerichtet ist, den Steckanschluss (14) mit einer sich quer zu einer Längsrichtung (L_{K}) des Kabelhalters (9) erstreckenden Steckrichtung (S_{R}) zu halten, und
- das Rohrteil (7) umfangsseitig eine Durchstecköffnung (15) aufweist, durch die ein mit dem Steckanschluss (14) zusammenwirkender Gegensteckanschluss (16) der elektrischen Steckverbindung durchsteckbar ist.

5. Bearbeitungsgerät nach einem der Ansprüche 1 bis 4, weiter **dadurch gekennzeichnet, dass** der Kabelhalter (9) eine Ferritkernhalterung (17) für ein mit der Kabelanordnung (8) verbundenes, elektrisches Ferritkern-Bauelement (18) aufweist.

6. Bearbeitungsgerät nach einem der Ansprüche 1 bis 5, weiter **gekennzeichnet durch**
- einen Geräteschaft (1), der den Handbedienbereich (6) und das Rohrteil (7) als ein sich in den Handbedienbereich (6) hinein und/oder durch den Handbedienbereich (6) hindurch erstreckendes Schaftrohr (7a) umfasst,
- einen ersten Geräteteil (2) an einem ersten axialen Endbereich (3) des Geräteschaftes (1) und
- einen zweiten Geräteteil (4) an einem zweiten axialen Endbereich (5) des Geräteschaftes (1),
- wobei sich der Handbedienbereich (6) zwischen den beiden Geräteteilen (2, 4) befindet.

7. Bearbeitungsgerät nach einem der Ansprüche 1 bis 5, weiter **gekennzeichnet durch**
- einen Geräteschaft (1),
- einen ersten Geräteteil (2) an einem ersten axialen Endbereich (3) des Geräteschaftes (1),
- einen zweiten Geräteteil (4) an einem zweiten axialen Endbereich (5) des Geräteschaftes (1) und
- einen am Geräteschaft (1) an einer Stelle zwischen dem ersten und dem zweiten axialen Endbereich (3, 5) gehaltenen und vom Geräteschaft (1) abstehenden Bediengriffschaft (22), der den Handbedienbereich (6) und das Rohrteil (7) als ein Griffrohr (7b) umfasst.

8. Bearbeitungsgerät nach Anspruch 6 oder 7, weiter **gekennzeichnet durch**
- ein Bearbeitungswerkzeug (19) im ersten Geräteteil (2), wobei der erste Geräteteil (2) einen vorderen Geräteteil bildet, und
- einen Antriebsmotor (20) für das Bearbeitungswerkzeug (19), wobei der Antriebsmotor (20) im ersten oder im zweiten Geräteteil (2, 4) angeordnet ist.

9. Bearbeitungsgerät nach Anspruch 8, weiter **gekennzeichnet durch** eine elektrische Batterieeinheit (21) im zweiten Geräteteil (4), die als elektrische Energiequelle für den Antriebsmotor (20) dient.

10. Bearbeitungsgerät nach einem der Ansprüche 1 bis 9, weiter **dadurch gekennzeichnet, dass** es als handgeführtes, insbesondere handgetragenes, Garten- oder Forstbearbeitungsgerät ausgebildet ist.

11. Verfahren zur Montage eines Bearbeitungsgerätes nach einem der Ansprüche 1 bis 10, **dadurch gekennzeichnet, dass** die Kabelanordnung (8) mit Hilfe des Kabelhaltemittels (10) am Kabelhalter (9) befestigt wird und anschließend der Kabelhalter (9) mit der daran gehaltenen Kabelanordnung (8) in das Rohrteil (7) eingefügt wird.

12. Verfahren nach Anspruch 11, weiter **dadurch gekennzeichnet, dass** das Rohrteil (7) nach Einfügen des Kabelhalters (9) in eine zugeordnete Rohraufnahme (6a) des Handbedienbereichs (6) eingeschoben wird.

## Claims

1. Working apparatus, preferably hand-guided garden or forestry working apparatus, comprising
- a manual operating region (6),
- a tubular part (7) extending away from the manual operating region (6), and
- an electric cable arrangement (8) in the tubular part (7),
**characterized by**
- a rod-shaped cable holder (9), which is inserted into and held in the tubular part (7) and has a cable holding arrangement (10), by which the cable arrangement (8) is held in a pre-mounted manner on the cable holder (9).

2. Working apparatus according to Claim 1, further **characterized in that**
- the tubular part (7) extends into the manual operating region (6) and/or extends through the manual operating region (6),
- the manual operating region (6) comprises a manually movable operating element (11₁), and
- the tubular part (7) comprises at its circumference a through opening (12₁), through which the operating element (11₁) extends at least in an associated actuating position.

3. Working apparatus according to Claim 1 or 2, further **characterized in that** the cable holder (9) comprises a plug connector mount (13) for a plug connector (14), connected to the cable arrangement (8), of an electric plug connection.

4. Working apparatus according to Claim 3, further **characterized in that**
- the plug connector mount (13) is configured to hold the plug connector (14) with a plug-in direction (S_{R}) extending transversely to a longitudinal direction (L_{K}) of the cable holder (9), and
- the tubular part (7) has at its circumference a passage opening (15) through which a mating plug connector (16), interacting with the plug connector (14), of the electric plug connection is capable to be passed.

5. Working apparatus according to any one of Claims 1 to 4, further **characterized in that** the cable holder (9) has a ferrite core mount (17) for an electric ferrite core component (18) connected to the cable arrangement (8).

6. Working apparatus according to any one of Claims 1 to 5, further **characterized by**
- an apparatus shaft (1), which comprises the manual operating region (6) and the tubular part (7) as a shaft tube (7a) extending into the manual operating region (6) and/or through the manual operating region (6),
- a first apparatus part (2) at a first axial end region (3) of the apparatus shaft (1), and
- a second apparatus part (4) at a second axial end region (5) of the apparatus shaft (1),
- wherein the manual operating region (6) is situated between the two apparatus parts (2, 4).

7. Working apparatus according to any one of Claims 1 to 5, further **characterized by**
- an apparatus shaft (1),
- a first apparatus part (2) at a first axial end region (3) of the apparatus shaft (1),
- a second apparatus part (4) in a second axial end region (5) of the apparatus shaft (1), and
- an operating handle shaft (22), which is held on the apparatus shaft (1) at a location between the first and the second axial end region (3, 5), projects from the apparatus shaft (1) and comprises the manual operating region (6) and the tubular part (7) as a handle tube (7b).

8. Working apparatus according to Claim 6 or 7, further **characterized by**
- a working tool (19) in the first apparatus part (2), wherein the first apparatus part (2) forms a front apparatus part, and
- a drive motor (20) for the working tool (19), wherein the drive motor (20) is arranged in the first or in the second apparatus part (2, 4).

9. Working apparatus according to Claim 8, further **characterized by** an electric battery unit (21) in the second apparatus part (4), which serves as an electric power source for the drive motor (20).

10. Working apparatus according to any one of Claims 1 to 9, further **characterized in that** it is designed as a hand-guided, preferably hand-held, garden or forestry working apparatus.

11. Method for assembling a working apparatus according to any one of Claims 1 to 10, **characterized in that** the cable arrangement (8) is secured on the cable holder (9) by means of the cable holding arrangement (10), and the cable holder (9), with the cable arrangement (8) held thereon, is then inserted into the tubular part (7) .

12. Method according to Claim 11, further **characterized in that**, after the cable holder (9) has been inserted, the tubular part (7) is inserted into an associated tube receptacle (6a) of the manual operating region (6).

## Revendications

1. Appareil de traitement, en particulier appareil de jardinage ou de sylviculture à main, comprenant
- une zone de commande manuelle (6),
- une partie tubulaire (7) s'étendant depuis la zone de commande manuelle (6)
et
- un ensemble formant câbles électriques (8) situé dans la partie tubulaire (7),
**caractérisé par**
- un support de câbles (9) en forme de tige qui est inséré dans la partie tubulaire (7) et maintenu dans celle-ci et qui comporte un moyen de retenue de câble (10) à l'aide duquel l'ensemble formant câble (8) est pré-monté et maintenu au support de câble (9).

2. Appareil de traitement selon la revendication 1, **caractérisé en outre en ce que**
- la partie tubulaire (7) s'étend jusque dans la zone de commande manuelle (6) et/ou à travers la zone de commande manuelle (6),
- la zone de commande manuelle (6) comporte un élément de commande (11₁) déplaçable manuellement et
- la partie tubulaire (7) comprend du côté périphérique une ouverture de passage (12₁) par laquelle l'élément de commande (11₁) s'étend au moins jusque dans une position d'actionnement associée.

3. Appareil de traitement selon la revendication 1 ou 2, **caractérisé en outre en ce que** le support de câble (9) comporte un support de raccord enfichable (13) destiné à un raccord enfichable (14), relié à un ensemble formant câble (8), d'une liaison électrique par enfichage.

4. Appareil de traitement selon la revendication 3, **caractérisé en outre en ce que**
- le support de raccord enfichable (13) est conçu pour maintenir le raccord enfichable (14) de sorte qu'une direction d'enfichage (S_{R}) s'étende transversalement à une direction longitudinale (L_{K}) du support de câble (9), et
- la partie tubulaire (7) comporte du côté périphérique une ouverture d'enfichage (15) par laquelle peut être enfiché un raccord enfichable homologue (16), coopérant avec le raccord enfichable (14), de la liaison électrique par enfichage.

5. Appareil de traitement selon l'une des revendications 1 à 4, **caractérisé en outre en ce que** le support de câble (9) comporte un support de noyau de ferrite (17) destiné à un composant à noyau de ferrite électrique (18) relié à l'ensemble formant câble (8).

6. Appareil de traitement selon l'une des revendications 1 à 5, **caractérisé en outre par**
- une tige d'appareil (1) qui comprend la zone de commande manuelle (6) et la partie tubulaire (7) en tant que tube de tige (7a) qui s'étend jusque dans la zone de commande manuelle (6) et/ou à travers la zone de commande manuelle (6),
- une première partie d'appareil (2) située au niveau d'une première zone d'extrémité axiale (3) de la tige d'appareil (1) et
- une deuxième partie d'appareil (4) située au niveau d'une deuxième zone d'extrémité axiale (5) de la tige d'appareil (1),
- la zone de commande manuelle (6) étant située entre les deux parties d'appareil (2, 4).

7. Appareil de traitement selon l'une des revendications 1 à 5, **caractérisé en outre par**
- une tige d'appareil (1),
- une première partie d'appareil (2) située au niveau d'une première zone d'extrémité axiale (3) de la tige d'appareil (1),
- une deuxième partie d'appareil (4) située au niveau d'une deuxième zone d'extrémité axiale (5) de la tige d'appareil (1) et
- une tige de préhension et de commande (22) qui est maintenue sur la tige d'appareil (1) à un emplacement situé entre les première et deuxième zones d'extrémité axiale (3, 5), qui fait saillie de la tige d'appareil (1) et qui comprend la zone de commande manuelle (6) et la partie tubulaire (7) en tant que tube de préhension (7b) .

8. Appareil de traitement selon la revendication 6 ou 7, **caractérisé en outre par**
- un outil de traitement (19) situé dans la première partie d'appareil (2), la première partie d'appareil (2) formant une partie d'appareil avant, et
- un moteur d'entraînement (20) destiné à l'outil de traitement (19), le moteur d'entraînement (20) étant disposé dans la première ou dans la deuxième partie d'appareil (2, 4).

9. Appareil de traitement selon la revendication 8, **caractérisé en outre par** une unité de batterie électrique (21) située dans la deuxième partie d'appareil (4) et servant de source d'énergie électrique au moteur d'entraînement (20).

10. Appareil de traitement selon l'une des revendications 1 à 9, **caractérisé en outre en ce qu'**il est conçu comme un appareil de jardinage ou de sylviculture à main, en particulier porté à la main.

11. Procédé de montage d'un appareil de traitement selon l'une des revendications 1 à 10, **caractérisé en ce que** l'ensemble formant câble (8) est fixé au support de câble (9) à l'aide du moyen de retenue de câble (10) puis le support de câble (9), sur lequel est maintenu l'ensemble formant câble (8), est inséré dans la partie tubulaire (7).

12. Procédé selon la revendication 11, **caractérisé en outre en ce que** la partie tubulaire (7) est poussée jusque dans un logement tubulaire associé (6a) de la zone de commande manuelle (6) après insertion du support de câble (9).
